# EUROPÄISCHE PATENTSCHRIFT

(11) **EP 0 622 389 B1**
(45) Veröffentlichungstag und Bekanntmachung des Hinweises auf die Patenterteilung: **10.02.1999**
(21) Anmeldenummer: 94106322.4
(22) Anmeldetag: 22.04.1994
(51) Int. Cl.: C08G 18/63, C08G 18/64, C08G 18/70, C08F 283/00, C09D 5/44

(54) **Wässrige Kunstharzdispersion**
Aqueous synthetic resin dispersion
Dispersion aqueuse de résine synthétique

(30) Priorität: 30.04.1993 DE 4314297
(43) Veröffentlichungstag der Anmeldung: 02.11.1994
(73) Patentinhaber: HOECHST AKTIENGESELLSCHAFT, 65926 Frankfurt am Main (DE)
(72) Erfinder: Hönel, Michael, Dr., D-65189 Wiesbaden (DE); Völker, Achim, Dr., D-65197 Wiesbaden (DE); Walz, Gerd, Dr., D-65207 Wiesbaden (DE); Ziegler, Peter, Dr., D-55130 Mainz (DE)
(74) Vertreter: Zounek, Nikolai, Dipl.-Ing.

(56) Entgegenhaltungen:
- EP-A- 0 261 385
- EP-A- 0 415 593
- EP-A- 0 415 594
- EP-A- 0 470 674

## Beschreibung

Bei der Elektrotauchlackierung werden vorzugsweise solche Elektrotauchlacke eingesetzt, die als Bindemittel kationische, durch Amine modifizierte Epoxidharze als wasserlösliche Basisharzkomponente und mit Alkoholen und/oder Aminen blockierte Polyisocyanate als Vernetzer enthalten.

Zur Herstellung der einzelnen Bindemittelkomponenten müssen aus Viskositäts- oder Reaktivitätsgründen Lösemittel eingesetzt werden. So werden bei der Synthese der Basisharze protische (Alkohole, Glykole) und aprotische Lösemittel wie Ketone, Ester oder Aromaten und bei der Synthese der Vernetzerkomponente aprotische Lösemittel verwendet.

Bekannterweise wird aber mit steigendem Lösemittelgehalt in kathodischen Tauchlackierungs- (KTL)-Bädern der Umgriff (Hohlraumbeschichtung) verschlechtert, es treten Überbeschichtungen auf und Lösemittel gelangen vermehrt in das Abwasser und/oder die Abluft. Daher müssen die Lösemittel den Bindemitteln vor und/oder nach dem Dispergieren in Wasser z.B. durch Destillation oder Ultrafiltration entzogen werden. Dabei verbleibt verfahrensbedingt ein Teil der Lösemittel in den Dispersionen und es fallen, besonders beim sogenannten "Strippen" aus wäßriger Phase und beim Ultrafiltrieren größere Mengen eines Lösemittel-Wasser-Gemisches an, das entsorgt werden muß.

Es bestand daher die Aufgabe, ein vereinfachtes und ökologisch unbedenkliches Verfahren zur Herstellung wäßriger KTL-Bindemittel-Dispersionen zu entwickeln, die weitgehend frei von organischen Lösemitteln sind.

Diese Aufgabe wird überraschenderweise dadurch gelöst, daß die Herstellung der Bindemittelkomponenten in Gegenwart ungesättigter Monomere erfolgt, die anschließend durch Emulsions- bzw. Suspensionspolymerisation in wasserunlösliche Polymere überführt werden. Man erhält auf diese Weise wäßrige Dispersionen.

Gegenstand der Erfindung ist ein Verfahren zur Herstellung von wäßrigen Kunstharz-Dispersionen, dadurch gekennzeichnet, daß in der ersten Stufe ein kationisches Amino-Epoxid-Harz A) aus Epoxidgruppenhaltigen Harzen und Aminen in Gegenwart eines oder mehrerer radikalisch polymerisierbarer olefinisch ungesättigter Monomere C) hergestellt wird, in der zweiten Stufe zu dieser Mischung ein blockiertes Polyisocyanat B) zugegeben wird, das entweder nach Addition des Verkappungsmittels an das multifunktionelle Isocyanat in olefinisch ungesättigten Monomeren C) gelöst wird, oder das durch Zugabe des Verkappungsmittels zur Lösung des Isocyanats in olefinisch ungesättigten Monomeren C) bereits als Lösung anfällt, in der dritten Stufe das erhaltene Gemisch durch Protonisieren mit Säuren wasserverdünnbar gemacht wird, und nach Zugabe von Wasser und Radikalbildnern die olefinisch ungesättigten Monomere C) polymerisiert werden.

Die kationischen Harze A) enthalten bevorzugt Gruppen mit einem aktiven Wasserstoffatom wie Hydroxyl-, primäre oder sekundäre Amino- oder Thiol-Gruppen. Diese Gruppen dienen als reaktive Zentren bei der Härtung des Lacks mit Vernetzungsmitteln wie beispielsweise blockierte Polyisocyanaten.

Bei der Komponente A) handelt es sich um ein durch Neutralisation mit organischen Säuren wasserverdünnbares Amino-Epoxidharz und/oder solche Carbonat/Amin-Addukte, die in DE-A 36 44 370 und EP-A 272 665 beschrieben sind. Solche Amino-Epoxidharze weisen im allgemeinen eine Aminzahl von 30 bis 150 (mg KOH pro g Festharz), eine Hydroxylzahl von 50 bis 500 (mg KOH pro g Festharz), eine mittlere Molmasse (Mn) von 250 bis 10000, bevorzugt 300 bis 5000 g/mol auf. Die untere Grenze der Aminzahl sollte bevorzugt 45, besonders bevorzugt 70 sein, die obere Grenze dagegen sollte bevorzugt bei 120, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so bildet sich bei der Abscheidung ein schlecht haftender Film oder eine blasige Oberfläche.

Beispiele für Amino-Epoxidharze sind Umsetzungsprodukte von epoxidgruppenhaltigen Harzen mit vorzugsweise endständigen Epoxidgruppen aus den Gruppen Polyglycidylether, Polyglycidylester und Polyglycidylamine mit gesättigten und/oder ungesättigten sekundären und/oder primären Aminen bzw. Aminoalkoholen. Diese können durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Hydroxylgruppenhaltige Amino-Epoxidharze werden zweckmäßig aus Polyglycidylethern mit bevorzugt zwei 1,2-Epoxidgruppen pro Molekül erhalten. Unter Polyglycidylethern im Rahmen dieser Erfindung werden vorzugsweise solche Polyglycidylether der allgemeinen Formel 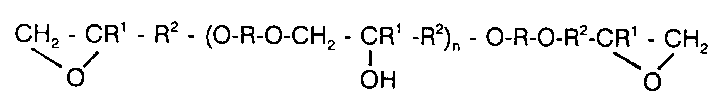 mit 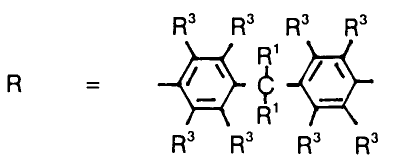 mit
- R¹ =: -H und/oder -CₘH₂ₘ+1
- R² =: -(CR¹)ₘ-, bevorzugt -CH₂-
- R³ =: -R¹, Halogen oder bevorzugt -H
- n =: 0 bis 8, bevorzugt 1 bis 6
- m =: 1 bis 8, bevorzugt 1
verstanden.

Diese Polyglycidylether haben eine mittlere Molmasse (Mn) von etwa 300 bis 5000 g/mol und eine Epoxid-Aquivalentmasse von etwa 170 bis 2500 g/mol.

Beispiele hierfür sind Umsetzungsprodukte von Epichlorhydrin oder Methylepichlorhydrin mit Dihydroxy-diphenylmethan (Bisphenol F) oder Dihydroxy-diphenylpropan (Bisphenol A), sowie mit Dihydroxy-benzophenon oder Dihydroxy-naphthalin. Polyepoxide mit geeigneter Molmasse werden entweder durch Auswahl der Mol-Verhältnisse von Bisphenol und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können vollständig oder teilweise hydriert sein oder in Gemischen mit unterschiedlicher Struktur und Molmasse eingesetzt werden. Weiterhin kann zum Elastifizieren ein Teil des beschriebenen Polyglycidylethers durch aliphatische Polyglycidylether der Formel 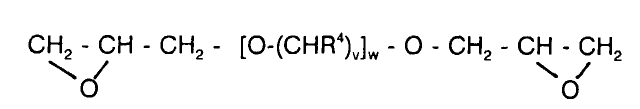 ersetzt werden, wobei
- R⁴: H oder ein niedriger, gegebenenfalls mit verschiedenen Substituenten versehener Alkylrest ist und
- v: Zahlen von 2 bis 6 und
- w: Zahlen von 5 bis 50 bedeuten.

Beispiele sind Bisglycidylether von Bisphenol A- und Bisphenol F-Polypropylenglykol und Polyethylenglykolethern mit verschiedenem Polymerisationsgrad. Die modifizierten Epoxidharze können auch durch Reaktion mit langkettigen Polyalkoholen wie Hexandiol-1.6, Neopentylglykol, bisethoxyliertes Neopentylglykol, Hydroxypivalinsäure-neopentylglykolester und Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären OH-Gruppen sich bei geeigneter Katalyse direkt mit Polyglycidylethern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidylether unter Vergrößerung der Molmasse und der Funktionalität eingebaut werden.

Eine ausführliche Aufzählung der geeigneten Epoxidverbindungen findet sich in den Handbüchern "Epoxidverbindungen und Harze" von A.M. Paquin, Springer Verlag Berlin 1958, Kapitel IV und "Handbook of Epoxy resins" von H.Lee, K. Neville, McGraw-Hill Book Company, New York 1982 Reissue, sowie "Epoxy resin chemistry and technology" von C.A. May, Marcel Dekker Inc., New York and Basel 1988.

Das Epoxidharz kann zum Senken der Aminzahl auch mit gesättigten oder ungesättigten Polycarbonsäuren und/oder Hydroxyalkylcarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure und dimere Fettsäure. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren.

Es können auch heterocyclische Polyepoxidverbindungen verwendet werden, wie 1,3-Diglycidyl-5.5-dimethylhydantoin, Triglycidylisocyanurat oder Diepoxide aus Bisimiden. Eine andere geeignete Klasse von Polyepoxiden sind Polyglycidylether von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Auch können Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen.

Als NH-reaktive Verbindungen werden verwendet primäre Amine wie Methylamin, Ethylamin, Propylamin, Butylamin, Octylamin, Monoethanolamin, 2-Ethylhexylamin, Dimethylaminopropylamin, Diethylaminoethylamin, Dimethylaminoneopentylamin oder Methoxypropylamin und/oder bevorzugt sekundäre Amine wie Dialkylamine, Monoalkylhydroxyalkylamine oder Dihydroxyalkylamine. Beispiele für solche Verbindungen sind Dimethylamin, Diethylamin, Dipropylamin, Dibutylamin, Methylbutylamin, Dimethylaminopropylamin, N-Methylaminoethanol oder Diethanolamin oder auch cyclische Amine, wie Morpholin oder Oxazolidin. Beim Einsatz der primären Amine reagiert das Amin in Abhängigkeit von den angebotenen stöchiometrischen Verhältnissen mit 1 bis 2 Epoxidgruppen unter Molekülvergrößerung.

Weiterhin können primäre Amine der allgemeinen Formel

H₂N-CR₁R₂-R₃-O(CHR₄-CHR₅O)ₙR₆

oder sekundäre Amine der allgemeinen Formel

R₇NH-CR₁R₂-R₃-O(CHR₄-CHR₅O)ₙ-R₃-CR₁R₂-NHR₇

eingesetzt werden.

In dieser Formel stehen R₁ und R₂ für Wasserstoff, Alkyl- oder -CH₂-OH Gruppen, R₃ steht für einen linearen oder verzweigten Alkylenrest, insbesondere für einen Alkylenrest mit 1 bis 3 Kohlenstoffatomen, R₄ und R₅ stehen für Wasserstoff oder Alkylreste mit 1 bis 4 Kohlenstoffatomen, R₆ steht für Wasserstoff, einen Alkyl-, Cycloalkyl- oder Phenylrest, vorzugsweise für einen Alkylrest mit 1 bis 6 Kohlenstoffatomen und n =0-5, R₇ steht für einen linearen oder verzweigten Alkylrest mit 1 bis 6 Kohlenstoffatomen. Als Beispiele für solche Monoamine werden genannt: Ethanolamin, Propanolamin, Butanolamin, Ethylenglykolmono(2-aminoethyl)ether (H₂N-CH₂-CH₂-O-CH₂-CH₂-OH) und Diethylenglykolmono(3-aminopropyl)ether (H₂N-(CH₂)₃-O-CH₂-CH₂-O-CH₂-CH₂-OH). Beim Einsatz der primären Amine reagiert das Amin mit der Epoxidgruppe in Abhängigkeit von den angebotenen stöchiometrischen Verhältnissen unter Molekülvergrößerung. Als Beispiel für Diamine werden genannt: Jeffamine® M-Serie, Jeffamine® D-Serie und Jeffamine® ED-Serie.

Weiterhin kommen Di- oder Triamine mit primären und/oder sekundären Aminogruppen in Frage, wie z.B. Laurylpropylendiamin, Talgfettpropylendiamin.

Mit sekundären Diaminen tritt eine Kettenverlängerung ein. Als sekundäre Diamine, bevorzugt langkettige Diamine, werden N,N'-Dialkyldiaminoalkane wie z.B. N,N'-Bis(isohexyl)-1,6-diaminohexan, N,N'-Bis(isohexyl)isophorondiamin, N,N'-Bis(isohexyl)-dimethylhexamethylendiamin, N,N'-Bis(isohexyl)-2-methylpentamethylendiamin, N,N'-Bis(isohexyl)-ethylendiamin und N,N'-Bis(isohexyl)-di-(4-aminocyclohexyl)methan oder Umsetzungsprodukte von gesättigten Glycidylethern oder -estern oder Epoxyalkanen mit primären Diamino-alkanen verwendet wie das Additionsprodukt von Hexandiamin-1.6 mit 2 Mol Glycidylester der Versaticsäure (α-verzweigte Monocarbonsäuren, besonders mit C₉-C₁₁).

Als Monoepoxide können für diesen Zweck auch gesättigte oder ungesättigte Glycidylether oder α-Epoxide verschiedener Kettenlänge wie Dodecan-1,2-epoxid oder Butylenoxid eingesetzt werden. Die geeignete Zahl an Hydroxylgruppen entsteht dabei einmal automatisch aus der Epoxidgruppe bei der Addition der sekundären Aminogruppen, zum anderen kann sie durch Einsatz von Hydroxyalkylaminen gesteuert werden. Weiterhin können als sekundäre Diamine das Umsetzungsprodukt von 2 Mol 2-Ethylhexylamin mit 1 Mol Beckopox® EP 075 (Diglycidylether auf Basis von Propylenoxid) und/oder 1 Mol Beckopox EP 140, sowie aliphatische sekundäre Diamine auf Basis von Propylenoxid-Addukten von Diolen oder Triolen, wie z.B. Novamin®-Typen zum Einsatz kommen.

Die Molverhältnisse zwischen Epoxid- und Aminogruppen-haltigen Verbindungen sind so zu wählen, daß der vollständige Einbau des Amins gewährleistet ist, weil sonst durchbruchartige Oberflächenstörungen beim elektrophoretischen Beschichten auftreten können, d. h. ein geringfügiger Überschuß an Epoxidgruppen ist vorteilhaft.

Es können alle Amine gleichzeitig mit den Epoxidgruppen umgesetzt oder es kann stufenweise vorgegangen werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen. Die Herstellung des Amino-Epoxid-Harzes erfolgt in jedem Fall in Gegenwart eines oder mehrerer radikalisch polymerisierbarer ethylenisch ungesättigter Monomeren. Vorteilhafterweise geht man so vor, daß man zunächst das Epoxid-Harz in einem oder mehreren radikalisch polymerisierbaren ethylenisch ungesättigten Monomeren löst und dann mit den Aminen umsetzt.

Für Vernetzungsreaktionen müssen in dem Amino-Epoxid-Harz stets Hydroxylgruppen vorhanden sein. Die im Molekül vorhandene Hydroxylzahl (ausgedrückt in mg KOH pro Gramm Festharz) ist maßgebend für die Vernetzungsfähigkeit des Films. Sie sollte über 50, vorzugsweise über 100, besonders vorteilhaft über 150 liegen. Die obere Grenze der Hydroxylzahl liegt bei 400, vorteilhafter unter 300. Ist die Hydroxylzahl zu niedrig, so entstehen bei der Vernetzung Filme, die noch in organischen Lösemitteln wie Methylethylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Die für den Vernetzungsprozeß wichtigen primären und/oder sekundären Hydroxylgruppen können anteilweise durch primäre und/oder sekundäre Aminogruppen ersetzt werden. Das Einführen von primären Aminogruppen in den Harzgrundkörper erfolgt vorzugsweise durch Umsetzen von mindestens ein, bevorzugt mindestens zwei Epoxidgruppen pro Molekül enthaltenden Harzen mit einem amino- und/oder hydroxylgruppenhaltigen Ketimin und/oder Aldimin und/oder Polyamin. Die Ketimine werden nach bekannten Methoden durch Wasserabspaltung aus den entsprechenden Polyaminen der allgemeinen Struktur R-NR-R-NH₂ oder den entsprechenden Aminoalkoholen der allgemeinen Struktur HO-R-NH₂ und den geeigneten aliphatischen Ketonen wie Diethylketon, Methylisobutylketon, Ethyl-n-propylketon oder auch Cyclopentanon, Cyclohexanon, Acetophenon usw. hergestellt. Bevorzugte Ketimine sind Umsetzungsprodukte aus Methylisobutylketon und Diethylentriamin. Die Reaktionsbedingungen (Reaktionstemperatur, Auswahl des Lösemittels) müssen so gewählt werden, daß keine die Ketiminbindung zersetzende Substanzen wie Wasser in dem Reaktionsprodukt vorhanden bleiben.

Das Ketimin schützt die primäre Aminogruppe (vgl. US-A-3,523,925), so daß das Amin über eine weitere funktionelle Gruppe, z.B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muß gewährleistet sein, daß kein unumgesetztes niedrigmolekulares Amin im Ansatz zurückbleibt, weil sonst durchbruchartige Oberflächenstörungen beim elektrophoretischen Beschichten auftreten. Die Reaktion der sekundären Aminogruppen des Polyaminoketimins mit der Epoxidgruppe beginnt schon bei Raumtemperatur und ist im allgemeinen exotherm. Um eine vollständige Umsetzung zu erreichen, ist es in der Regel notwendig, die Temperatur zeitweise auf 50 bis 120 °C zu erhöhen.

Die verkappten Polyisocyanate (Komponente B) werden dadurch hergestellt, daß man ein multifunktionelles Isocyanat mit mindestens einer stöchiometrischen Menge einer monofunktionellen, aktiven Wasserstoff (Zerewitinoff-Reaktion) enthaltenden Verbindung umsetzt, wobei gegebenenfalls basische Katalysatoren wie tert. Amine oder geringe Mengen an Zinnsalzen wie Dibutylzinndilaurat zugegeben werden können. Die Isocyanatgruppe wird auf diese Weise bei Raumtemperatur gegen Reaktionen mit Wasser oder Alkoholen geschützt. Die Schutzgruppe spaltet sich bei Einbrenntemperaturen von weniger als 210 °C, vorzugsweise weniger als 190 °C, besonders unter 180 °C, andererseits über 110 °C, vorzugsweise über 150 °C, wieder ab, so daß eine Vernetzungsreaktion mit den Hydroxylgruppen des Basisharzes stattfinden kann. Mittel, die die Isocyanate blockieren, enthalten nur eine einzige Amin-, Amid-, Lactam-, Thio- oder Hydroxylgruppe. So haben sich beispielsweise bewährt aliphatische oder cycloaliphatische Alkohole wie Methanol, Ethanol, Propanol, Butanol, Pentanol, Hexanol, 2-Ethylhexanol, 2-Pyridincarbinol, Dialkylaminoalkohole wie Dimethylaminoethanol, Oxime wie Methylethylketoxime, Lactame wie ε-Caprolactam oder Pyrrolidon-2, Imide wie Phthalimid oder N-Hydroxy-maleinimid, Hydroxyalkylester, Malonsäure- oder Acetessigsäureester. Es werden aber auch β-Hydroxyglykole oder -glykolether und Glykolamide empfohlen.

Als typische multifunktionelle Isocyanate eignen sich aliphatische, cycloaliphatische und/oder aromatische Polyisocyanate mit mindestens zwei Isocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethandiisocyanat, Diphenyltetraisocyanat, bevorzugt Naphthyltetraisocyanat, Toluylen-, Isophoron- und Xylylendiisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethan-diisocyanat sowie aliphatische Diisocyanate der allgemeinen Formel

O = C = N - (CR₂ )ᵣ - N = C = O

worin r eine ganze Zahl von 2 bis 20, insbesondere 6 bis 8 ist und R Wasserstoff oder einen niedrigen Alkylrest mit 1 bis 8 C-Atomen, vorzugsweise 1 oder 2 C-Atomen dargestellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat, Dicyclohexylmethan-diisocyanat, Diphenylmethandiisocyanat, Trimethylendiisocyanat, Tetramethylendiisocyanat oder Toluylendiisocyanat.

Vinylpolymerisate, die Isocyanatgruppen enthalten und durch Copolymerisation von z. B. Cyanatoethyl(meth)acrylat oder Dimethyl-isopropylbenzylisocyanat mit Alkyl(meth)acrylaten und/oder (Alkyl)-vinylbenzolen entstehen, können auch verwendet werden. Ebenso sind gemischte aliphatische/aromatische Isocyanat-Verbindungen geeignet.

Als Polyisocyanate haben sich auch Produkte bewährt, die durch Trimerisation oder Oligomerisation der oben genannten Diisocyanate oder durch Reaktion dieser Diisocyanate mit polyfunktionellen OH- oder NH-Gruppen enthaltenden Verbindungen entstehen. Falls notwendig, kann die mittlere Funktionalität gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Eine Molekülvergrößerung kann auch durch Reaktion mit tert. Aminogruppen enthaltenden Polyalkoholen wie N-Methyl-diethanolamin, Triethanolamin oder tertiäre Aminogruppen enthaltenden Polyaminen wie 3-(Methyl)-3-(2-Aminoethyl)-aminopropylen erfolgen. Um die Löslichkeit zu verbessern, können außerdem kettenabbrechende N-Dialkyl-aminoalkohole wie Dimethyl-aminoethanol oder N,N-Dialkyl-alkylendiamine wie Dimethylaminopropylen oder N,N-Diethyl-N'-Methyl-1,2-ethandiamin eingesetzt werden. Isocyanathaltige Präpolymere auf Basis von Polyglykolethern, Polyesterpolyolen, Polyetherpolyolen, Polycaprolactonpolyolen und/oder Polycaprolactampolyolen können ebenfalls mit Vorteil eingesetzt werden.

Zur Synthese des verkappten Polyisocyanats kann das entsprechende Mono- oder Di-isocyanat vor Zugabe des Verkappungsmittels in den zur Herstellung des Polymers C) benötigten ethylenisch ungesättigten Verbindungen C) oder deren Mischungen gelöst werden. Alternativ hierzu kann das ungesättigte Monomere auch nach der Addition des Verkappungsmittels an das Isocyanat zugegeben werden.

Eine andere Variante besteht darin, daß die beschriebenen Diisocyanate in stöchiometrisch geeigneter Weise mit den beschriebenen Monoalkoholen und/oder Aminen nur halbblockiert werden, wobei Umsetzungsprodukte von Butylglykol bzw. Butyldiglykol mit Toluylendiisocyanat und Methylethylketoxim mit Isophoron- und Tetramethylxylylendiisocyanat bevorzugt sind. Die Halbverkappung kann lösemittelfrei in Substanz oder in den beschriebenen Monomeren durchgeführt werden. Solche halbblockierten Diisocyanate werden dann über die verbleibende NCO-Funktion entweder vor oder vorzugsweise nach der Umsetzung der Epoxidharze mit den Aminen an die freien Hydroxyl- bzw. Aminogruppen des Epoxidharzes bzw. des Amino-Epoxidharzes addiert, wobei diese Addition vorzugsweise in Gegenwart der beschriebenen Monomere durchgeführt wird. Auf diese Weise erhält man sogenannte selbstvernetzende Systeme, die ebenfalls Gegenstand dieser Erfindung sind. Zur Ausbalancierung anwendungstechnischer Eigenschaften kann einem selbstvernetzenden System anteilsweise ein blockiertes Polyisocyanat B) zugemischt werden.

Als ungesättigte Monomere, die bereits bei der Synthese des Amino-Epoxidharzes oder auch bei der Synthese des verkappten Isocyanats vorhanden sind bzw. nach deren Synthese zugegeben werden, kommen vorzugsweise Acryl- oder Methacrylsäureester von 1 bis 18 Kohlenstoffatome enthaltenden Monoalkoholen, vorzugsweise n-Butylmethacrylat, Methylmethacrylat, Isobutylacrylat, 2-Ethylhexylacrylat, insbesondere Butylacrylat in Betracht. Weitere geeignete Monomere sind Styrol, Vinyltoluol, α-Methylstyrol oder höher substituierte Styrole, wie z.B. 2,4-Dimethylstyrol, sowie Vinylester von 2 bis 15 Kohlenstoffatome enthaltenden Monocarbonsäuren, wie z.B. Vinylacetat, Vinylpropionat, Vinylpivalat, Vinylversatat. Bevorzugt sind hier insbesondere Styrol, Vinyltoluol und α-Methylstyrol. Weiterhin können als ungesättigte Monomere Hydroxylalkylacrylate, bevorzugt Hydroxyethyl(meth)acrylat oder Hydroxypropyl(meth)acrylat oder ungesättigte 1,2-Epoxidgruppen enthaltende Monomere wie Glycidyl(meth)acrylat genommen werden. Monomere dieser Art können wegen ihrer reaktiven Gruppen erst nach Abschluß der Synthese des Amino-Epoxidharzes bzw. des verkappten Isocyanats zugefügt werden. Auch bei den ungesättigten Monomeren, welche keine solchen reaktiven Gruppen enthalten, kann ein Teil davon erst nach Abschluß der Synthese des Amino-Epoxidharzes zugegeben werden. Die Menge an ungesättigten Monomeren bzw. an Polymer C) beträgt ca. 1 bis 80, vorzugsweise 5 bis 30 Gew.-%, bezogen auf die Gesamtmenge der Komponenten A), B) und C), jeweils als Feststoff gerechnet.

Das Mischungsverhältnis der Komponenten A) zu B) liegt bevorzugt zwischen 90 zu 10 und 60 : 40 Gew.-% und wird empirisch aus den optimal erreichbaren anwendungstechnischen Eigenschaften bei der gegebenen Einbrenntemperatur bestimmt. Die Komponenten A) und B), bevorzugt deren Mischungen mit den ungesättigten Monomeren, können in dem beschriebenen Verhältnis entweder kalt gemischt werden oder Komponente B) wird der in situ gefertigten Komponente A) bei höherer Temperatur zugesetzt. Anschließend werden in der Lackverarbeitung gebräuchliche Additive und Säuren zugegeben.

Die Vernetzung der OH-gruppenhaltigen Komponente A) mit blockierten Polyisocyanaten B) kann gegebenenfalls durch Zusatz von 0,01 bis 2 Gew.-%, speziell 0,5 bis 1 Gew.-%, bezogen auf die Summe der Komponenten A) und B), stark basischer tertiärer Amine und/oder aktiver Metallverbindungen beschleunigt werden. Eine besondere, manchmal synergistische Wirkung wird erreicht, wenn das abgeschiedene OH-gruppenhaltige Harz in einem stark basischen Medium vorliegt und Metallsalze von Wismut, Blei, Cobalt, Eisen, Antimon und/oder Zinn-II- und -IV genommen werden. Besonders bevorzugt werden Katalysatoren wie Eisen-III-acetylacetonat, Dibutylzinn-dilaurat, Tri-n-butyl-zinn-oxid, Dibutylzinn-dioctylmaleat, Zinn-octoat, Zinn-oleat, Tetrabutyltitanat, Cobalt-2-ethylhexoat und Umsetzungsprodukte von Bismuttrioxid mit Hydroxycarbonsäuren wie z.B. Milchsäure oder Dimethylolpropionsäure.

Zum Ausbalancieren der anwendungstechnischen Eigenschaften ist es zweckmäßig, daß das an der Kathode abscheidbare Harz außer dem Vernetzungsmittel noch zusätzlich bis zu 15 Gew.-%, bevorzugt 1 bis 10 Gew.-% hydroxy- und/oder amino- und/oder epoxyfunktioneller doppelbindungshaltiger Monomere enthält, die mit den blockierten Polyisocyanaten und dem Aminoepoxidharz reagieren können.

Durch Protonisieren mit Säuren wird das kationische Bindemittelgemisch in an sich bekannter Weise wasserverdünnbar gemacht. Beispiele für Säuren sind Ameisensäure, Milchsäure, Essigsäure, Propionsäure, Zitronensäure, Malonsäure, Acrylsäure, Dimethylolpropionsäure, Oxalsäure, Phosphorsäure oder Alkylphosphorsäuren. Monobasische niedrigmolekulare organische Carbonsäuren werden bevorzugt. Es muß mindestens so viel Säure zugegeben werden, daß eine stabile Emulgierung des kationischen Basisharzes erfolgt. Ein Überschuß an Säure, d.h. ein Neutralisationsgrad über 100 %, ist zweckmäßig zu vermeiden. Der MEQ-Wert (Milliäquivalente Säure pro 100g Festharz) liegt im allgemeinen zwischen 20 und 80. Es wird ein möglichst niedriger MEQ-Wert angestrebt, um ein möglichst hohes Abscheideäquivalent zu erhalten. Diese Mischung wird dann mit vorzugsweise 60 - 95 °C warmem, entmineralisierten Wasser zu einer Emulsion weiterverarbeitet.

In der entstandenen Emulsion werden durch Zugabe von Radikalbildnern anschließend die vorhandenen ungesättigten Monomere nach bekannten Emulsionspolymerisationstechniken polymerisiert und man erhält 30 bis 60%ige, vorzugsweise 30 bis 40%ige Dispersionen. Anwendung als Radikal-Initiatoren können sowohl alle bekannten Redoxsysteme als auch thermisch zerfallende Radikalbildner wie Azoverbindungen, Peroxide, Persäureester und Hydroperoxide finden. Bevorzugt wird tert-Butylhydroperoxid/Ascorbinsäure. Die Molekulargewichte der so erhaltenen polymeren Harze C) liegen, bestimmt nach der Gelpermeationschromatographie-Methode, zwischen 10.000 und 2.000.000, vorzugsweise zwischen 30.000 und 600.000 g/mol. Zur Feineinstellung geeigneter Molgewichte können gegebenenfalls Regler eingesetzt werden, wie z.B. Alkohole, Polyether, Mercaptane oder unterphosphorige Säure. Die Polymerisationstemperaturen liegen im allgemeinen zwischen ca. 20 und 95 °C. Sie richten sich nach dem anzustrebenden Molmassenbereich und den verwendeten Polymerisationsinitiatoren und deren Wirkungsoptimum.

Die erfindungsgemäßen Dispersionen gemäß Anspruch 6 eignen sich ausgezeichnet als ionisch stabilisierte Bindemittel auf Wasserbasis. Besonders bevorzugt wird die Weiterverarbeitung zu Elektrotauchlacken, indem die wäßrige Bindemitteldispersion mit Pigmenten wie Titandioxid und Ruß und gegebenenfalls Katalysatoren, die beide vorzugsweise über eine wäßrige Pigmentpaste eingearbeitet werden, versetzt wird.

Die Herstellung von Pigmentpasten ist allgemein bekannt und braucht nicht näher erläutert zu werden, vergleiche dazu D.H. Parker, Principles of Surface Coating technology, Interscience Publishers, New York (1965); R.L. Yates, Electropainting, Robert Draper Ltd., Teddington/England, (1966); H.F. Payne, Organic Coating technology, Band 2, Wiley and Sons, New York (1961).

Diese Elektrotauchlacke auf der Basis der erfindungsgemäßen Dispersionen können Bleisilikat als Korrosionsschutzpigment enthalten. Ein besonderer Vorteil liegt jedoch darin, daß die erfindungsgemäßen Dispersionen sich für bleifreie Elektrotauchlacke eignen.

### Herstellungsbeispiele:

### 1. 1 Herstellung der Vernetzer

### Vernetzer B-1

In einem Reaktionsgefäß, das mit Rührer, Thermometer, Tropftrichter und Rückflußkühler ausgerüstet ist, werden zu einer Lösung aus 119.31 g Toluylendiisocyanat (TDI), 0.05 g DBTL (Dibutylzinnlaurat), 57.74 g Butylmethacrylat und 0.59 g lonol bei Raumtemperatur 80.91 g Butylglycol so zudosiert, daß die Innentemperatur 50 °C nicht übersteigt. Sobald ein NCO-Wert von 12.48 % (kalkuliert auf Festharz) erreicht ist, werden 30.63 g Trimethylolpropan in 3 Portionen zugesetzt. Anschließend hält man die Temperatur solange unterhalb von 90 °C bis ein NCO-Wert von < 0.2 % erreicht ist und setzt 20.00 g 2-Ethylhexanol zu.
Festkörper: 74.82 Gew.-%

### Vernetzer B-2

Wie Vernetzer B-1 nur mit Butylacrylat als Lösemittel.
Festkörper: 74.82 Gew.-%

### Vernetzer B-3

Wie Vernetzer B-1 nur mit Styrol als Lösemittel.
Festkörper: 74.82 Gew.-%

### Vernetzer B-4

Wie Vernetzer B-1 nur mit alpha-Methylstyrol als Lösemittel.
Festkörper: 73.52 Gew.-%

### Vernetzer B-5

In einem Reaktionsgefäß, das mit Rührer, Thermometer, Tropftrichter und Rückflußkühler ausgerüstet ist, werden zu einer Lösung aus 52.2 g Toluylendiisocyanat (TDI), 29.32 g Toluol bei Raumtemperatur 35.40 g Butylglycol so zudosiert, daß die Innentemperatur 50 °C nicht übersteigt. Sobald ein NCO-Wert von 12.48 % (kalkuliert auf Festharz) erreicht ist, werden 13.43 g Trimethylolpropan in 3 Portionen zugesetzt. Anschließend hält man die Temperatur solange unterhalb von 90 °C bis ein NCO-Wert von < 0.2 % erreicht ist und setzt 18.01 g Methoxypropanol und 7.05 g 2-Ethylhexanol zu.
Festkörper: 65 Gew.-%

### 1.2. Herstellung des Aminoepoxidharzes

### Aminoepoxidharz A-1:

In einem Reaktionsgefäß, das mit Rührer, Thermometer, Tropftrichter und Rückflußkühler ausgerüstet ist, werden zu einer Lösung aus 428.62 g Polygycidylether auf Basis Bisphenol A mit einem Epoxidäquivalentgewicht von 472, 142.27 g Styrol und 0.40 g lonol, 31.78 g Diethanolamin bei 40 °C zudosiert. Anschließend werden 15.44 g Dimethylaminopropylamin und 93.23 g eines Adduktes von 116 g 1.6-Diaminohexan mit 500 g Cardura® E 10, dem Glycidester einer alpha verzweigten C-9 - C-11 Monocarbonsäure, bei 40 - 50 °C zugesetzt und die Lösung langsam auf 90-100 °C aufgeheizt. Zur Vervollständigung der Reaktion hält man die angegebene Temperatur noch 3 Stunden. Der Epoxidgehalt ist dann Null.
Aminzahl: 98 (mg KOH/g Festharz)
Festkörper: 74.74 Gew.-%.

### Aminoepoxidharz A-2: (Vergleich)

In einem Reaktionsgefäß, das mit Rührer, Thermometer, Tropftrichter und Rückflußkühler ausgerüstet ist, werden zu einer Lösung aus 566.4 g Polygycidylether auf Basis Bisphenol A mit einem Epoxidäquivalentgewicht von 472, in 322.0 g Methoxypropanol, 42.00 g Diethanolamin bei 40 °C zudosiert. Anschließend werden 20.4 g Dimethylaminopropylamin und 123.2 g eines Adduktes von 116 g 1.6-Diaminohexan mit 500 g Cardura® E 10, dem Glycidester einer alpha verzweigten C-9 - C-11 Monocarbonsäure, bei 40 - 50 °C zugesetzt und die Lösung langsam auf 90-100 °C aufgeheizt. Zur Vervollständigung der Reaktion hält man die angegebene Temperatur noch 3 Stunden. Der Epoxidgehalt ist dann Null.
Aminzahl: 98 (mg KOH/g Festharz)
Festkörper: 70 Gew.-%.

### 1.3 Wäßrige Dispersionen D-1 - D-4:

In einem Reaktionsgefäß, das mit Rührer, Thermometer, Tropftrichter und Rückflußkühler ausgerüstet ist, werden zu der auf 90 - 100 °C aufgeheizten Lösung von 761.40 g des Amino-epoxidharzes A, 308.64 g des Vernetzers B, und 16.24 g 85 %ige Ameisensäure zugemischt. Anschließend wird die in Tabelle 1 angegebene Menge entmineralisiertes Wasser untergemischt und bei 90 °C eine 1 % ige Initiatorlösung von Ascorbinsäure/tert.Butylhydroperoxid in entmineralisiertem Wasser über 0.5 Stunden zudosiert und unter Schutzgas (Stickstoff) bei 90 °C solange nachpolymerisiert bis sich ein konstanter Festkörpergehalt (Einwaage 1-2 g, Bed.: 125 °C, 1 h) ergibt. Nach dieser allgemeinen Vorschrift werden die in Tabelle 1 dargestellten Dispersionen erhalten.

**Tabelle 1:**

| Dispersion | Epoxyamin | Vernetzer | Deionisiertes Wasser | Initiator (1%ig) | Reaktionszeit bei 90°C | Festkörper (1h, 125°C) | MEQ* | *Restmonomer |
|---|---|---|---|---|---|---|---|---|
| D-1 | A-1 | B-1 | 1726,8 g | 133 g | 2 h | 35 Gew.-% | 30 | < 0,3% |
| D-2 | A-1 | B-2 | 1722,2 g | 137 g | " | " | " | " |
| D-3 | A-1 | B-3 | 1715,2 g | 144 g | " | " | " | " |
| D-4 | A-1 | B-4 | 1443,0 g | 419 g | 3 h | " | " | " |

### 1.4 Wäßrige Dispersion D-5 (Vergleich)

In einem Reaktionsgefäß, das mit Rührer, Thermometer, Tropftrichter und Rückflußkühler ausgerüstet ist, wird eine auf 80 - 85 °C aufgeheizte Mischung von 813.27 g des Amino-epoxidharzes A-2, 40.0 g Texanol, 16.0 g 2-Ethylhexanol und 355.15 g des Vernetzers B-5 unter Vakuum ausdestilliert. Sobald mehr als 90 % des Lösemittels aufgefangen sind, neutralisiert man mit 13.0 g 85 %ige Ameisensäure und dispergiert unter kontinuierlicher Zugabe von 1397.0 g entmineralisierten Wassers.

| | |
|---|---|
| Festkörper: | 35 Gew.-% |
| MEQ | 30 |
| Rest-LM: MOP | 2.0 - 2.5 % |
| Tol | 0.2 - 0.5 % |
| Summe | 2.2 - 3.0 % |

### 2. Herstellung einer Pigmentpaste

**2.1. Herstellung eines Pastenharzes**
   **2.1.1.** Zu einer Lösung von 204 Teilen (2mol) N,N-Dimethylaminopropylamin in 1224 Teilen Ethoxypropanol werden bei 60 - 80 °C während einer Stunde 1708 Teile (4 mol) Denacol EX-145 (Phenol-(EO5)-glycidylether) einlaufen gelassen und anschließend bei 80 - 100 °C gehalten bis eine EP-Zahl von praktisch 0 erreicht ist (Aminzahl ca. 117 mg KOH/g Feststoff; ca. 50%ig).
      Zu dieser Lösung werden 2464 Teile des unter 2.1.2 hergestellten Addukts eingetragen und diese Mischung bei 60 - 80 °C solange gehalten bis eine Säure- und Epoxyzahl von praktisch 0 erreicht wird. Anschließend wird das Lösemittel im Vakuum entfernt, 128 Teile Butylglycol und 400 Teile Milchsäure (90%) zugesetzt. Die Dispergierung erfolgt durch kontinuierliche Zugabe von 2245.24 Teilen vollentsalzten Wasser, so daß sich ein Festkörpergehalt von 55 % einstellt.
   **2.1.2.** 1280 Teile (2 Äquivalente Epoxid) Beckopox® SEP 311 (75%ig in Xylol) werden auf 80 °C erwärmt. Zu dieser Lösung werden während einer Stunde 1184 Teile des Urethans nach 2.1.3. (75%ig) einlaufen gelassen und bei 80 °C gehalten bis der %NCO-Wert praktisch 0 ist. Anschließend wird im Vakuum vom Lösemittel befreit und mit 1232 Teilen Ethoxypropanol auf ca. 60 % verdünnt.
   **2.1.3.** Zu 348 Teilen Desmodur® T 80 (80 % 2,4-, 20 % 2,6-Toluylendiisocyanat) in 296 Teilen Xylol werden bei 40 - 60 °C 540 Teile Iso-Octadecylalkohol und 0,9 Teile DBTL während einer Stunde einlaufen gelassen und anschließend bis zu einem %NCO-Wert von ca. 9,5 bei dieser Temperatur gehalten (ca. 75%ig).
**2.2. Herstellung der bleifreien Pigmentpaste P-1**
   In einem mit einem Rührer ausgestatten Gefäß werden 13.88 Teile Bindemittel nach 2.1.1.; 3.13 Teile Texanol, 0.84 Teile Essigsäure (50%ig) und 1.97 Teile einer 1:1-Mischung von 2,4,7,9-Tetramethyl-5-decin-4,7-diol (Surfynol® 104, Netzmittel), und Sektol® vorgelegt. Zu dieser Mischung werden unter Rühren 3.66 Teile Dibutylzinnoxid, 0.31 Teile Ruß, 38.14 Teile Titandioxid, 0.61 Teile Aerosil und 37.45 Teile vollentsalztes Wasser zudosiert. Nach einstündigem Rühren wird die Pigmentpastenmischung unter Kühlung auf einer Perlmühle 1 Stunde vermahlen (SAZ-Perlen: 0.1 mm).
**2.3. Herstellung der bleihaltigen Pigmentpaste P-2**
   In einem mit einem Rührer ausgestatten Gefäß werden 13.88 Teile Bindemittel nach 2.1.1.; 3.13 Teile Texanol, 0.84 Teile Essigsäure (50%ig) und 1.97 Teile einer 1:1-Mischung von 2,4,7,9-Tetramethyl-5-decin-4,7-diol (Surfynol 104, Netzmittel), und Sektol vorgelegt. Zu dieser Mischung werden unter Rühren 3.66 Teile Dibutylzinnoxid , 0.31 Teile Ruß, 3.67 Teile Bleisilikat, 38.14 Teile Titandioxid, 0.61 Teile Aerosil und 33.78 Teile vollentsalztes Wasser zudosiert. Nach einstündigem Rühren wird die Pigmentpastenmischung unter Kühlung auf einer Perlmühle 1 Stunde vermahlen (SAZ-Perlen: 0.1 mm).
**3.1 Formulierung der bleifreien KTL-Lacke L-1 bis L-4**
   In einem mit Rührer ausgestatteten Becherglas werden 1268.57 Teile der 35 % igen Bindemitteldispersion (D-1 - D-4) vorgelegt, mit 1.5 g Ameisensäure (50%) versetzt und mit 2010.93 Teilen vollentsalzten Wasser verdünnt. Anschließend setzt man 418.80 Teile der unter Punkt 2.2 hergestellten Pigmentpaste P-1.
**3.2 Herstellung der bleihaltigen KTL-Lacke L-5 bis L-8**
   In einem mit Rührer ausgestatteten Becherglas werden 1268.57 Teile der 35 % igen Bindemitteldispersion (D-1 - D-4) vorgelegt, mit 1.5 g Ameisensäure (50%) versetzt und mit 2010.93 Teilen vollentsalzten Wasser verdünnt. Anschließend setzt man 418.80 Teile der unter Punkt 2.3 hergestellten Pigmentpaste (P-2) zu.
**3.3 Herstellung eines bleifreien KTL-Lacks L-9**
   In einem mit Rührer ausgestatteten Becherglas werden 1268.57 Teile der 35 %-igen Bindemitteldispersion (D-5) vorgelegt, mit 1.5 g Ameisensäure (50%) versetzt und mit 2010.93 Teilen vollentsalzten Wasser verdünnt. Anschließend setzt man 418.80 Teile der unter Punkt 2.3 hergestellten Pigmentpaste (P-1) zu.
**3.4 Herstellung eines bleihaltigen KTL-Lacks L-10**
   Die Herstellung dieses Lacks erfolgte mit den gleichen Komponenten wie bei KTL-Lack L-9, jedoch mit Pigmentpaste (P-2) anstelle von Pigmentpaste (P-1).
**4. Abscheideergebnisse:**
   Auf als Kathode geschalteten Eisenblankblechen wurde bei 225 V 2 Minuten bei einer Badtemperatur von 32 °C beschichtet, mit Wasser abgespült und 30 Minuten bei 170 °C eingebrannt. Die eingebrannten Filme zeigten eine Trockenfilmstärke von 20 µm und keine Krater.

Die anwendungstechnischen Ergebnisse der bleifrei formulierten KTL-Lacke (L-1 - L-4) und der bleihaltigen KTL-Lacke (L-5 - L-8) sind in Tabelle 2 und Tabelle 3 zusammengefaßt:

**Tabelle 2**

| **Bleifreie KTL-Lacke:** | | | | | | |
|---|---|---|---|---|---|---|
| Paste | Dispersion | Erichsen Tiefung (mm) | Impact (inch pound) | Salzsprühtest (240 h) | Siebrückstand (3 Wochen) | Lack |
| P-1 | D-1 | 8.6 | > 80 | < 1.5 mm | < 50 mg/l | L-1 |
| P-1 | D-2 | 8.4 | " | " | " | L-2 |
| P-1 | D-3 | 8.7 | " | " | " | L-3 |
| P-1 | D-4 | 8.3 | " | " | " | L-4 |
| Vergleich P-1 | D-5 | 8.9 | " | " | " | L-5 |

**Tabelle 3**

| **Bleihaltige KTL-Lacke:** | | | | | | |
|---|---|---|---|---|---|---|
| Paste | Dispersion | Erichsen Tiefung (mm) | Impact (inch pound) | Salzsprühtest (240 h) | Siebrückstand (3 Wochen) | Lack |
| P-2 | D-1 | 8.6 | > 80 | < 1.5 mm | < 50 mg/l | L-5 |
| P-2 | D-2 | 8.4 | " | " | " | L-6 |
| P-2 | D-3 | 8.7 | " | " | " | L-7 |
| P-2 | D-4 | 8.3 | " | " | " | L-8 |
| Vergleich P-2 | D-5 | 8.9 | " | " | " | L-10 |

## Patentansprüche

1. Verfahren zur Herstellung von wäßrigen Kunstharz-Dispersionen, dadurch gekennzeichnet, daß in der ersten Stufe ein kationisches Amino-Epoxid-Harz A) aus Epoxidgruppenhaltigen Harzen und Aminen in Gegenwart eines oder mehrerer radikalisch polymerisierbarer olefinisch ungesättigter Monomere C) hergestellt wird, in der zweiten Stufe zu dieser Mischung ein blockiertes Polyisocyanat B) zugegeben wird, das entweder nach Addition des Verkappungsmittels an das multifunktionelle Isocyanat in olefinisch ungesättigten Monomeren C) gelöst wird, oder das durch Zugabe des Verkappungsmittels zur Lösung des Isocyanats in olefinisch ungesättigten Monomeren C) bereits als Lösung anfällt, in der dritten Stufe das erhaltene Gemisch durch Protonisieren mit Säuren wasserverdünnbar gemacht wird, und nach Zugabe von Wasser und Radikalbildnern die olefinisch ungesättigten Monomere C) polymerisiert werden.

2. Verfahren nach Anspruch 1, dadurch gekennzeichnet, daß in der ersten Stufe das Amino-Epoxid-Harz derart hergestellt wird, daß zunächst das Epoxid-Harz in einem oder mehreren radikalisch polymerisierbaren olefinisch ungesättigten Monomeren gelöst wird und dann mit Aminen umgesetzt wird.

3. Verfahren nach Anspruch 1, dadurch gekennzeichnet, daß die olefinisch ungesättigten Monomere ausgewählt sind aus Acryl- und Methacrylsäure-Estern von Monoalkoholen mit 1 bis 18 Kohlenstoffatomen, Styrol, Vinyltoluol und Vinylestern von Monocarbonsäuren mit 2 bis 15 Kohlenstoffatomen.

4. Verfahren nach Anspruch 1, dadurch gekennzeichnet, daß das Verhältnis der Masse des Amino-Epoxid-Harzes A) zur Masse des blockierten Isocyanates B) zwischen 90 zu 10 und 60 zu 40 liegt.

5. Verfahren nach Anspruch 1, dadurch gekennzeichnet, daß der Massenanteil an olefinisch ungesättigten Monomeren C) an der Summe der Massen von Amino-Epoxidharz A), blockiertem Isocyanat B) und olefinisch ungesättigten Monomeren C), 1 bis 80 % beträgt.

6. Wäßrige Kunstharzdispersion, erhältlich nach dem Verfahren von Anspruch 3.

7. Verwendung von wäßrigen Kunstharzdispersionen nach Anspruch 6 zur Herstellung von Elektrotauchlacken.

## Claims

1. A process for preparing aqueous synthetic-resin dispersions which comprises in the first stage preparing a cationic amino-epoxy resin A) from epoxy-functional resins and amines in the presence of one or more free-radically polymerizable olefinically unsaturated monomers C), in the second stage adding to this mixture a blocked polyisocyanate B) which either is dissolved in olefinically unsaturated monomers C) following addition reaction of the blocking agent with the multifunctional isocyanate or is obtained as a solution by the very addition of blocking agent to the solution of the isocyanate in olefinically unsaturated monomers C), in the third stage rendering the resulting mixture dilutable in water, by protonation with acids, and, following the addition of water and free-radical initiators, polymerizing the olefinically unsaturated monomers C).

2. The process as claimed in claim 1, wherein the amino-epoxy resin is prepared in the first stage by first of all dissolving the epoxy resin in one or more free-radically polymerizable olefinically unsaturated monomers and then reacting the solution with amines.

3. The process as claimed in claim 1, wherein the olefinically unsaturated monomers are selected from acrylic and methacrylic esters of monoalcohols of 1 to 18 carbon atoms, styrene, vinyltoluene and vinyl esters of monocarboxylic acids of 2 to 15 carbon atoms.

4. The process as claimed in claim 1, wherein the ratio of the mass of the amino-epoxy resin A) to the mass of the blocked isocyanate B) is between 90:10 and 60:40.

5. The process as claimed in claim 1, wherein the mass of olefinically unsaturated monomers C) as a proportion of the total masses of amino-epoxy resin A), blocked isocyanate B) and olefinically unsaturated monomers C) is from 1 to 80%.

6. An aqueous synthetic-resin dispersion obtainable by the process of claim 3.

7. The use of aqueous synthetic-resin dispersions as claimed in claim 6 for preparing electrodeposition coating materials.

## Revendications

1. Procédé de préparation de dispersions aqueuses de résines synthétiques, caractérisé en ce que, dans la première étape, on prépare une résine amino-époxyde cationique A) à partir de résines et d'amines contenant des groupes époxydes en présence d'un ou de plusieurs monomères C) oléfiniquement insaturés aptes à la polymérisation radicalaire, dans la deuxième étape on ajoute à ce mélange un polyisocyanate bloqué B), qui est soit dissous dans des monomères C) oléfiniquement insaturés après addition de l'agent de masquage à l'isocyanate multifonctionnel, ou qui est déjà produit sous forme de solution par addition de l'agent de masquage à la solution de l'isocyanate dans les monomères C) oléfiniquement insaturés, dans la troisième étape on rend le mélange obtenu diluable à l'eau par protonisation avec des acides, et on polymérise les monomères C) oléfiniquement insaturés après ajout d'eau et de générateurs de radicaux libres.

2. Procédé selon la revendication 1, caractérisé en ce que l'on prépare, dans la première étape, la résine amino-époxyde, de manière à ce que la résine époxyde soit d'abord dissoute dans un ou plusieurs monomères oléfiniquement insaturés, aptes à la polymérisation radicalaire, et soit ensuite transformée avec des amines.

3. Procédé selon la revendication 1, caractérisé en ce que les monomères oléfiniquement insaturés sont choisis parmi les esters d'acide acrylique et méthacrylique de monoalcools avec 1 à 18 atomes de carbone, de styrène, de vinyletoluène et les esters de vinyle d'acides monocarboxyliques ayant 2 à 15 atomes de carbone.

4. Procédé selon la revendication 1, caractérisé en ce que le rapport de la masse de la résine amino-époxyde A) par rapport à la masse de l'isocyanate bloqué B) se situe entre 90 à 10 et 60 à 40.

5. Procédé selon la revendication 1, caractérisé en ce que le titre en masse des monomères C) oléfiniquement insaturés par rapport à la somme des masses de résine amino-époxy A), d'isocyanate bloqué B) et de monomères C) oléfiniquement insaturés est de 1 à 80%.

6. Dispersion aqueuse de résine synthétique, qu'on peut obtenir au moyen du procédé selon la revendication 3.

7. Utilisation de dispersions aqueuses de résine synthétique selon la revendication 6 pour la fabrication de peintures par électrophorèse.
